# EUROPÄISCHE PATENTSCHRIFT

(11) **EP 1 121 478 B1**
(45) Veröffentlichungstag und Bekanntmachung des Hinweises auf die Patenterteilung: **18.07.2007**
(21) Anmeldenummer: 99955776.2
(22) Anmeldetag: 17.09.1999
(51) Int. Cl.: D04B 1/22

(54) **VERFAHREN ZUM ANBRINGEN VON BEFESTIGUNGSELEMENTEN AN EINEM GESTRICKTEN SITZBEZUG UNS SITZBEZUG MIT BEFESTIGUNGSELEMENTEN**
METHOD FOR INTEGRATING FASTENERS INTO A KNITTED SEAT COVER AND SEAT COVER WITH FASTENERS
PROCEDE POUR MONTER DES ELEMENTS DE FIXATION SUR UNE HOUSSE DE SIEGE EN TISSU MAILLE ET HOUSSE DE SIEGE MUNIE D'ELEMENTS DE FIXATION

(30) Priorität: 09.10.1998 DE 19847331
(43) Veröffentlichungstag der Anmeldung: 08.08.2001
(73) Patentinhaber: Gebrüder Achter GmbH & Co. KG, 41063 Mönchengladbach (DE)
(72) Erfinder: ROELL, Friedrich, D-88400 Biberach (DE)
(74) Vertreter: Bauer, Dirk
(86) Internationale Anmeldenummer: PCT/DE1999/003051
(87) Internationale Veröffentlichungsnummer: WO 2000/022213

(56) Entgegenhaltungen:
- EP-A- 0 361 855
- EP-A- 0 589 395
- EP-A- 0 734 670
- WO-A-94/26655
- DE-A- 19 636 208
- US-A- 5 457 968

## Beschreibung

Die Erfindung betrifft einen gestrickten Sitzbezug mit Befestigungselementen zur Befestigung des Sitzbezuges an einem Sitzbezugträger, bei dem an der dem Träger zugewandten Seite des Sitzbezuges Befestigungsbereiche zur Festlegung an dem Träger vorgesehen sind, die mit komplementären Befestigungsbereichen an dem Sitzbezugträger zusammenwirken.

Ein entsprechender Sitzbezug ist aus der EP-A-0 734 670 bekannt. Die Befestigungselemente sollen jedoch auch für die Befestigung anderer textiler Elemente wie z.B. Isolationen oder Filtereinsätze verwendbar sein.

Früher wurden Befestigungselemente zum Beispiel in Form von Röhren oder Ösen in einem separaten Nähvorgang an einen bereits vorgefertigten Sitzbezug angenäht. Da diese Sitzbezüge in der Regel gewebt waren und immer konfektioniert werden mussten, d.h. die einzelnen Sitzbezugteile miteinander vernäht werden mussten, um einen dreidimensionalen Sitzbezug zu schaffen, fiel das Annähen der Befestigungselemente an der Unterseite des Sitzbezuges als zusätzlicher Arbeitsschritt nicht stark ins Gewicht.

Heutzutage ist es möglich, einen dreidimensionalen Sitzbezug ohne jegliche Konfektionierung zu stricken, weshalb ein Bedarf nach einer technischen Lösung besteht, mittels der die Befestigungselemente beim Stricken des Bezuges miteingebracht werden können.

Die EP 361 855 A1 zeigt ein Verfahren, bei dem röhrenförmige Befestigungselemente einstückig bei der Herstellung, d.h. beim Stricken des Sitzbezuges mitangestrickt werden. Dies hat nun den Vorteil, daß der zusätzliche Verfahrensschritt des Annähens der Befestigungselemente an den gewünschten Stellen entfällt. Andererseits werden jedoch durch dieses Verfahren die Maschinenlaufzeiten sehr stark erhöht und die röhrenförmigen Befestigungselemente, die mit dem Stricken des Sitzbezuges als Schlauch ebenfalls gestrickt werden, lassen sich nicht beliebig lang und in beliebiger Festigkeit stricken. Ein weiterer Nachteil dieses Verfahrens besteht darin, daß die Anstrickpunkte der Befestigungselemente in der Regel auch auf der Sichtseite des Bezuges sichtbar sind.

Es ist daher Aufgabe der vorliegenden Erfindung, eine schnelle Herstellung von Sitzbezügen mit integrierten Befestigungselementen zu gestatten, wobei die Befestigungselemente eine hohe Stabilität aufweisen, in beliebiger Form und Stabilität herstellbar sind und von der Sichtseite des Gestricks aus weniger sichtbar sind als bei den bekannten Verfahren. Weiterhin ist es Aufgabe der Erfindung, einen Sitzbezug mit integrierten Befestigungselementen zu schaf-fen, die von der Sichtseite aus nicht sichtbar sind und die eine optimale Anpassung des Sitzbezuges an den Sitzbezugträger gestatten.

Diese Aufgabe wird durch einen Sitzbezug gemäß Anspruch 1 gelöst. Vorteilhafte Weiterbildungen sind Gegenstand der Unteransprüche 2 bis 5.

Erfindungsgemäß werden Klebefäden mit einem niedrigen Schmelzpunkt wie etwa Grilon® von Ems Chemie entweder als Grundgestrick vermascht und/oder als Kett- bzw. Schußfaden eingelegt bzw. aufplattiert. Vorzugsweise wird der Klebfaden in derart geflottete Maschen, d.h. sehr stark beabstandete Maschenbildung mit dem Grundgestrick oder in Form frotteeähnlicher Schlingen in das Grundgestrick eingearbeitet. Anschließend wird der Bezug auf das dreidimensionale Trägerteil aufgezogen. Dann wird, beispielsweise durch einfache Dampferhitzung, eine Verklebung des Bezug am Polsterträger an den Punkten erreicht, an welchem der Klebefaden sowohl das Gestrick als auch den Träger berührt. Dies können im Falle z.B. von Kett- oder Schußfäden bzw. Flottungen lineare Bereich oder auch Punkte sein, die aufgrund ihrer gezielten Verteilung in einem konturierten Bereich ein optimale Anlage des Bezugs am Träger ermöglichen. Dieses Verfahren läßt sich insbesondere bei Schaumpolsterträgern realisieren und kann alternativ oder zusätzlich zu linearen oder punktuellen Befestigungselementen in Form von Schlaufen, Kedern oder eingestrickten Bändern an dem Sitzbezug eingearbeitet werden. Zusammen mit dem Einbringen von Klebefäden können auch Thermoschrumpffäden an stark konturierten Bereichen aufgebracht werden, die sich bei thermischer Behandlung etwas zusammenziehen und somit zu einem dichten Anliegen des Polsterbezugs auf dem Sitzpolster oder Sitzträger führen. Durch die Kombination des Klebefadens mit dem Thermoschrumpffaden, der in gleicher Weise wie der Klebefaden in das Grundgestrick eingebracht werden kann, läßt sich somit ein Optimum von flächiger Verbindung des Sitzbezuges zum Sitzbezugträger als auch eine optimale Anpassung des Bezugs auf den Träger erreichen. Denn bei der thermischen Behandlung schrumpft nicht nur der Polsterbezug enganliegend auf den Bezugträger auf, sondern gleichzeitig mit diesem Aufschrumpfen wird durch die Aktivierung der Klebefäden die Verbindung zwischen Sitzbezug und Sitzbezugträger geschaffen. Dies führt zu optisch ansprechenden und homogenen Sitzen, bei denen die Befestigungselemente nach außen hin optisch nicht sichtbar sind. Durch die Befestigung mit Klebe- bzw. Schmelzfäden kann der Bezug nach der thermischen Behandlung direkt mit dem Träger verbunden werden, wobei keine Trennfolie zwischen Bezug und Hinterschäumung des Trägers benötigt wird, somit ein gutes Sitzklima geschaffen wird.

Alternativ oder zusätzlich zur Einbringung von Thermoschrumpffäden können selbstverständlich auch elastische Fäden wie zum Beispiel Gummifäden in die Grundstruktur des Gestricks miteingebracht werden, so daß sich der Sitzbezug elastisch an den Sitzbezugträger anlegt.

Die Erfindung wird nachfolgend beispielsweise anhand der schematischen Zeichnung beschrieben.

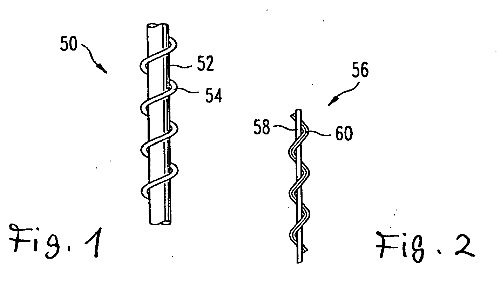

Die Zeichnungsfiguren 1 und 2 zeigen zwei unterschiedliche Ausführungsformen von Klebefäden, wie sie zur Herstellung von flächigen Befestigungsbereichen in ein Grundgestrick eingestrickt bzw. als Schuß- und/oder Kettfäden in das Grundgestrick eingelegt werden können. Der Klebefaden 50 gemäß Figur 1 enthält einen Basisfaden 52, der mit einem Klebefilament 54 umwunden ist, der bei einer Temperaturbehandlung aufschmilzt und verklebt. Bei dem Klebefaden 56 gemäß Figur 2 besteht die Seele aus einem Klebefilament 58, das von einem Multifilamentengarn 60 umwickelt ist. Dieser zweite Klebefaden weist eine höhere Elastizität auf und ist besonders in elastisch zu deformierenden Bereichen in das Grundgestrick des Sitzbezuges einzuarbeiten. Dies kann entweder durch direkte Vermaschung in das Gestrick, durch Einlegung als Kett- und/oder Schuß- und/oder Polfaden erfolgen.

## Patentansprüche

1. Gestrickter Sitzbezug mit Befestigungselementen zur Befestigung des Sitzbezuges an einem Sitzbezugträger, bei dem an der dem Träger zugewandten Seite des Sitzbezuges Befestigungsbereiche zur Festlegung an dem Träger vorgesehen sind, die mit komplementären Befestigungsbereichen an dem Sitzbezugträger zusammenwirken, **dadurch gekennzeichnet, dass** die Befestigungsbereiche an dem Sitzbezug durch eingearbeitete Klebefäden (50, 56) gebildet sind, deren Adhäsions- bzw. Klebeeigenschaften während oder nach der Herstellung des Bezuges bei erhöhter Temperatur aktivierbar sind.

2. Sitzbezug nach Anspruch 1, **dadurch gekennzeichnet, daß** in den Sitzbezug Thermoschrumpffäden eingestrickt bzw. eingearbeitet sind.

3. Sitzbezug nach Anspruch 1 oder 2, **dadurch gekennzeichnet, daß** die Klebefäden (50, 56) bzw. schrumpfende Fäden als Kett- und/oder Schußfäden in das Gestrick eingebracht sind.

4. Sitzbezug nach Anspruch 1, 2 oder 3, **dadurch gekennzeichnet, daß** die Klebefäden (50, 56) bzw. Schrumpffäden in dreidimensional konturierten Bereichen angeordnet sind, in denen die Außen(Sitz)seite des Bezugs gewölbt ist.

5. Sitzbezug nach einem der Ansprüche 1 bis 4, **dadurch gekennzeichnet, daß** in das Gestrick elastische oder teilelastische Fäden mit einer reversiblen Dehnungsfähigkeit > 5% eingearbeitet sind.

## Claims

1. A knitted seat cover with fasteners for fastening the seat cover to a seat cover carrier, in which fastening areas for fixing to the carrier are provided on the side of the seat cover facing the carrier, which fastening areas cooperate with complementary fastening areas of the seat cover carrier, **characterized in that** the fastening areas on the seat cover are formed by incorporated adhesive threads (50, 56) whose adhesive or gluing properties can be activated during or after production of the cover by increased temperature.

2. A seat cover according to claim 1, **characterized in that** heat shrinkage threads are knitted or incorporated in the seat cover.

3. A seat cover according to claim 1 or 2, **characterized in that** the adhesive threads (50, 56) or shrink threads are introduced as warp threads and/or weft threads into the knitted fabric.

4. A seat cover according to claim 1, 2 or 3, **characterized in that** the adhesive threads (50, 56) or shrink threads are arranged in three-dimensionally shaped areas in which the outer (seat) side of the cover is curved.

5. A seat cover according to one of the claims 1 to 4, **characterized in that** elastic or partly elastic threads with a reversible elasticity > 5% are incorporated in the knitted fabric.

## Revendications

1. Housse de siège tricotée avec des éléments de fixation pour fixer la housse de siège à un support de housse de siège sur laquelle sont prévues, sur le côté de la housse de siège tourné vers le support, des zones de fixation pour la fixation au support, ces zones de fixation coopérant avec des zones de fixation complémentaires situées sur le support de housse de siège, **caractérisée en ce que** les zones de fixation sur la housse de siège sont formées par des fils adhésifs (50, 56) incorporés dont les propriétés d'adhésion et de collage sont aptes à être activées à température plus élevée pendant ou après la réalisation de la housse.

2. Housse de siège selon la revendication 1, **caractérisée en ce que** des fils thermorétractables sont tricotés ensemble avec les autres fils du tricot ou incorporés d'une autre manière dans la housse de siège.

3. Housse de siège selon la revendication 1 ou 2, **caractérisée en ce que** les fils adhésifs (50, 56) ou les fils rétractables sont insérés dans le tricot sous forme de fils de chaîne et/ou de fils de trame.

4. Housse de siège selon la revendication 1, 2 ou 3, **caractérisée en ce que** les fils adhésifs (50, 56) ou les fils rétractables sont disposés dans des zones aux contours tridimensionnels dans lesquelles la face (de siège) extérieure de la housse est bombée.

5. Housse de siège selon l'une quelconque des revendications 1 à 4, **caractérisée en ce que** des fils élastiques ou partiellement élastiques d'une extensibilité réversible > 5 % sont incorporés dans le tricot.
